# EUROPEAN PATENT APPLICATION

(11) **EP 4 696 531 A1**
(43) Date of publication of application: **18.02.2026**
(21) Application number: 25190370.4
(22) Date of filing: 18.07.2025
(51) Int. Cl.: B60H 1/00, B60H 1/32

(54) **MANIFOLD**

(30) Priority: 24.07.2024 JP 2024118482
(71) Applicant: AISIN CORPORATION, Aichi 448-8650 (JP)
(72) Inventor: NAGURA, Kentaro, Kariya, Aichi, 448-8650 (JP); HIGASHI, Koichiro, Kariya, Aichi, 448-8650 (JP)
(74) Representative: TBK

(57) **Abstract**

A manifold (1) includes: a first manifold portion (10) including a refrigerant flow path (10A) through which a refrigerant flows; a second manifold portion (20) including a cooling liquid flow path (20A) through which a cooling liquid flows; and a coupling portion (30) configured to couple the first manifold portion and the second manifold portion to each other. The first manifold portion, the second manifold portion, and the coupling portion are integrally molded into an integrally molded product. A cross-sectional area of a surface orthogonal to a first direction (X) in which the first manifold portion and the second manifold portion face each other in the coupling portion is smaller than a cross-sectional area of a surface orthogonal to the first direction in each of the first manifold portion and the second manifold portion.

## Description

### TECHNICAL FIELD

This disclosure relates to a manifold including a refrigerant flow path through which a refrigerant flows and a cooling liquid flow path through which a cooling liquid flows.

### BACKGROUND DISCUSSION

In related art, a cooling and heating system is used to regulate a temperature in a vehicle interior of a vehicle. In some cooling and heating systems, a manifold is used in which a refrigerant flow path through which a refrigerant used for temperature regulation in cooling and heating flows and a cooling liquid flow path through which a cooling liquid flows are formed. As a technique related to such a manifold, for example, there is a technique described in WO 2024/024443 (Reference 1) described below.

Reference 1 describes a manifold. In the manifold, a refrigerant flow path and a cooling liquid flow path are formed in a flow path housing. The refrigerant flow path allows a refrigerant to flow through a compressor, a water-cooled condenser, an expansion valve, an evaporator, and a chiller. The cooling liquid flow path allows a cooling liquid to flow through the water-cooled condenser, the chiller, and a radiator (heat exchanger).

In the manifold described in Reference 1, the water-cooled condenser and the chiller are externally attached to the flow path housing. In the flow path housing, heat exchange is performed between the refrigerant flowing through the refrigerant flow path and the cooling liquid flowing through the cooling liquid flow path. Therefore, in the manifold, an inlet through which the refrigerant flows in and an outlet through which the cooling liquid flows out are close to each other, and an inlet through which the cooling liquid flows in and an outlet through which the refrigerant flows out are close to each other. However, there is a case where it is desired to prevent heat exchange between the refrigerant flowing through the refrigerant flow path and the cooling liquid flowing through the cooling liquid flow path, and there is room for improvement in the manifold described in Reference 1.

A need thus exists for a manifold capable of preventing heat exchange between a refrigerant flowing through a refrigerant flow path and a cooling liquid flowing through a cooling liquid flow path.

### SUMMARY

According to an aspect of this disclosure, a manifold included: a first manifold portion including a refrigerant flow path through which a refrigerant flows; a second manifold portion including a cooling liquid flow path through which a cooling liquid flows; and a coupling portion configured to couple the first manifold portion and the second manifold portion to each other. The first manifold portion, the second manifold portion, and the coupling portion are integrally molded into an integrally molded product. A cross-sectional area of a surface orthogonal to a first direction in which the first manifold portion and the second manifold portion face each other in the coupling portion is smaller than a cross-sectional area of a surface orthogonal to the first direction in each of the first manifold portion and the second manifold portion.

According to the above aspect, heat transfer from one of the first manifold portion and the second manifold portion to the other one can be prevented. Therefore, heat exchange between the refrigerant flowing through the refrigerant flow path of the first manifold portion and the cooling liquid flowing through the cooling liquid flow path of the second manifold portion can be prevented.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a diagram illustrating a manifold;
FIG. 2 is a perspective view of the manifold;
FIG. 3 is a diagram illustrating the manifold to which various valves are attached;
FIG. 4 is a diagram illustrating the manifold to which various valves are attached;
FIG. 5 is a circuit configuration diagram of a vehicle air conditioning system in which the manifold is used;
FIG. 6 is a diagram illustrating a refrigerant flow when cooling a battery during a cooling operation;
FIG. 7 is a diagram illustrating a refrigerant flow during a heating operation; and
FIG. 8 is a diagram illustrating an example in which a slit is provided in the manifold.

### DETAILED DESCRIPTION

A manifold according to this disclosure is configured to be able to prevent heat exchange between a refrigerant flowing through a refrigerant flow path and a cooling liquid flowing through a cooling liquid flow path. Hereinafter, a manifold 1 according to the present embodiment will be described. The manifold 1 is not limited to the following embodiment, and various modifications can be made without departing from the gist of this disclosure.

The manifold 1 is used in a vehicle air conditioning system A, which will be described in detail later. The vehicle air conditioning system A is mounted on a vehicle and includes a refrigerant module B, a cooling liquid module C, and a heating, ventilation, and air conditioning unit (HVAC unit) D. The refrigerant module B includes a refrigerant flow path 10A through which a refrigerant flows, and the cooling liquid module C includes a cooling liquid flow path 20A through which a cooling liquid flows.

A refrigerant such as hydrofluorocarbon (HFC) or hydrofluoroolefin (HFO) flows through the refrigerant flow path 10A. On the other hand, cooling water such as an antifreeze liquid or a long-life coolant mainly containing ethylene glycol or the like, or a cooling liquid containing insulating oil such as paraffin-based oil flows through the cooling liquid flow path 20A.

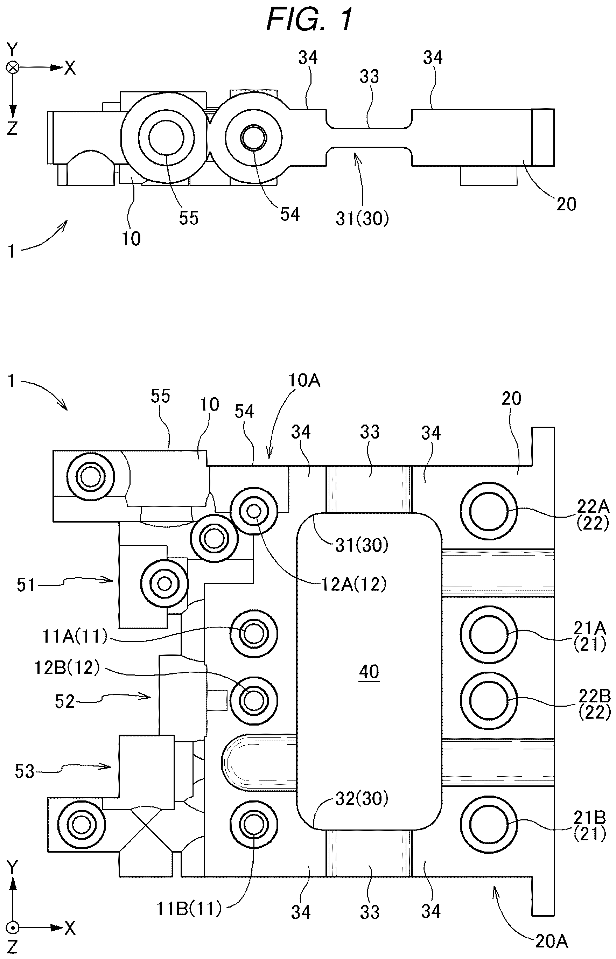

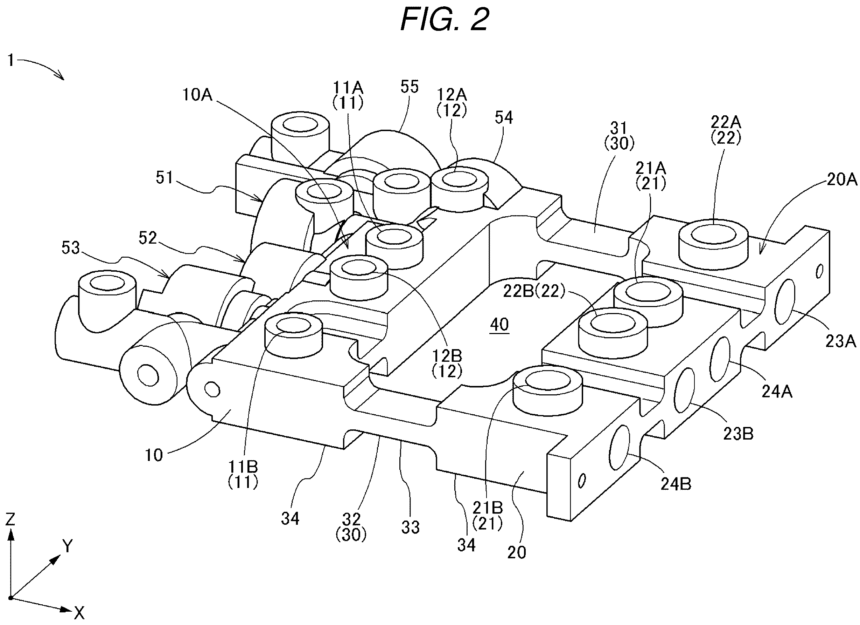

FIG. 1 is a diagram illustrating the manifold 1. FIG. 2 is a perspective view of the manifold 1. As illustrated in FIGS. 1 and 2, the manifold 1 includes a first manifold portion 10, a second manifold portion 20, and a coupling portion 30.

In the present embodiment, for ease of understanding, a direction in which the first manifold portion 10 and the second manifold portion 20 face each other is defined as a first direction X, and in a plan view of the manifold 1 as illustrated in a lower side in FIG. 1, a direction orthogonal to the first direction X is defined as a second direction Y, and a direction orthogonal to both the first direction X and the second direction Y is defined as a third direction Z.

The first manifold portion 10 includes the refrigerant flow path 10A. As described above, the refrigerant used in the vehicle air conditioning system A flows through the refrigerant flow path 10A.

The second manifold portion 20 includes the cooling liquid flow path 20A. As described above, the cooling liquid used in the vehicle air conditioning system A flows through the cooling liquid flow path 20A.

The coupling portion 30 couples the first manifold portion 10 and the second manifold portion 20 to each other. As illustrated in FIG. 1, when the first manifold portion 10 is positioned on one side in the first direction X and the second manifold portion 20 is positioned on the other side in the first direction X, the coupling portion 30 couples the first manifold portion 10 and the second manifold portion 20 along the first direction X.

In the present embodiment, the first manifold portion 10, the second manifold portion 20, and the coupling portion 30 are integrally molded into an integrally molded product. Therefore, the manifold 1 can be formed by casting a molten metal (an alloy of aluminum, zinc, magnesium, or the like) into a mold.

The manifold 1 is configured such that a cross-sectional area of a surface orthogonal to the first direction X in the coupling portion 30 is smaller than a cross-sectional area of a surface orthogonal to the first direction X in each of the first manifold portion 10 and the second manifold portion 20. In the present embodiment, the surface orthogonal to the first direction X is a surface parallel to the second direction Y, that is, a surface along a YZ plane. Therefore, the manifold 1 is configured such that a cross-sectional area of a surface parallel to the second direction Y in the coupling portion 30 is smaller than a cross-sectional area of a surface parallel to the second direction Y in each of the first manifold portion 10 and the second manifold portion 20. That is, a cross-sectional area of a surface along the YZ plane in the coupling portion 30 is smaller than both a cross-sectional area of a surface along the YZ plane in the first manifold portion 10 and a cross-sectional area of a surface along the YZ plane in the second manifold portion 20.

In the present embodiment, the first manifold portion 10 and the second manifold portion 20 are coupled to each other by a first coupling portion 31 and a second coupling portion 32 included in the coupling portion 30. The first coupling portion 31 and the second coupling portion 32 extend along the first direction X across the first manifold portion 10 and the second manifold portion 20, respectively. The first manifold portion 10 is provided on one end side in the first direction X, and the second manifold portion 20 is provided on the other end side in the first direction X. Therefore, the first coupling portion 31 and the second coupling portion 32 face each other in the second direction Y.

The first coupling portion 31 and the second coupling portion 32 are provided with a gap therebetween. That is, the first manifold portion 10 and the second manifold portion 20 are provided apart from each other in the second direction Y. Specifically, the first coupling portion 31 is provided at one end in the second direction Y, and the second coupling portion 32 is provided at the other end in the second direction Y. In the present embodiment, the gap corresponds to an opening portion 40 surrounded by the first coupling portion 31, the second coupling portion 32, the first manifold portion 10, and the second manifold portion 20. In the present embodiment, the opening portion 40 is formed in a rectangular shape when viewed in the third direction Z.

In the present embodiment, as illustrated in FIGS. 1 and 2, the first coupling portion 31 and the second coupling portion 32 are each configured such that a wall thickness along the third direction Z of a central portion 33 along the first direction X is smaller than a wall thickness along the third direction Z of base end portions 34 at one end side and the other end side in the first direction X.

As described above, the first manifold portion 10 includes the refrigerant flow path 10A, and the second manifold portion 20 includes the cooling liquid flow path 20A. However, in the present embodiment, neither the first coupling portion 31 nor the second coupling portion 32 is provided with the refrigerant flow path 10A nor the cooling liquid flow path 20A, and the first coupling portion 31 and the second coupling portion 32 are configured in a state in which a metal constituting the manifold 1 is clogged.

The first manifold portion 10 is provided with an inflow port 11 through which the refrigerant flows in and an outflow port 12 through which the refrigerant flows out. The inflow port 11 and the outflow port 12 each constitute the refrigerant flow path 10A.

The second manifold portion 20 is provided with an inflow port 21 through which the cooling liquid flows in and an outflow port 22 through which the cooling liquid flows out. The inflow port 21 and the outflow port 22 each constitute the cooling liquid flow path 20A.

In the present embodiment, two inflow ports 11 and two outflow ports 12 are provided in the first manifold portion 10, and two inflow ports 21 and two outflow ports 22 are provided in the second manifold portion 20. Hereinafter, for ease of understanding, the inflow ports 11 in the first manifold portion 10 are referred to as an inflow port 11A and an inflow port 11B, and the outflow ports 12 in the first manifold portion 10 are referred to as an outflow port 12A and an outflow port 12B. The inflow ports 21 in the second manifold portion 20 are referred to as an inflow port 21A and an inflow port 21B, and the outflow ports 22 in the second manifold portion 20 are referred to as an outflow port 22A and an outflow port 22B.

The two inflow ports 11 and the two outflow ports 12 in the first manifold portion 10 are arranged in a row along the second direction Y on a surface of the first manifold portion 10 on one side in the third direction Z, and the two inflow ports 21 and the two outflow ports 22 in the second manifold portion 20 are arranged in a row along the second direction Y on a surface of the second manifold portion 20 on one side in the third direction Z. In the present embodiment, the outflow port 12A, the inflow port 11A, the outflow port 12B, and the inflow port 11B are arranged in this order on a surface of the first manifold portion 10 on one side in the third direction Z, and the outflow port 22A, the inflow port 21A, the outflow port 22B, and the inflow port 21B are arranged in this order on a surface of the second manifold portion 20 on one side in the third direction Z.

The outflow port 12A, the inflow port 11A, the outflow port 12B, and the inflow port 11B in the first manifold portion 10 and the outflow port 22A, the inflow port 21A, the outflow port 22B, and the inflow port 21B in the second manifold portion 20 face each other with the opening portion 40 therebetween when viewed in the third direction Z. Therefore, the above-described gap is provided between the inflow port 11 and the outflow port 12 in the first manifold portion 10 and the inflow port 21 and the outflow port 22 in the second manifold portion 20.

In the present embodiment, the outflow port 12A is connected to a refrigerant inflow port of a water-cooled condenser 62, and the inflow port 11A is connected to a refrigerant outflow port of the water-cooled condenser 62. The outflow port 12B is connected to a refrigerant inflow port of a chiller 67, and the inflow port 11B is connected to a refrigerant outflow port of the chiller 67. The outflow port 22A is connected to a cooling liquid inflow port of the water-cooled condenser 62, and the inflow port 21A is connected to a cooling liquid outflow port of the water-cooled condenser 62. The outflow port 22B is connected to a cooling liquid inflow port of the chiller 67, and the inflow port 21B is connected to a cooling liquid outflow port of the chiller 67.

The outflow port 22A communicates with a cooling liquid supply port 23A provided in the YZ plane of the second manifold portion 20, and the inflow port 21A communicates with a cooling liquid exhaust port 24A provided in the YZ plane of the second manifold portion 20. The outflow port 22B communicates with a cooling liquid supply port 23B provided in the YZ plane of the second manifold portion 20, and the inflow port 21B communicates with a cooling liquid exhaust port 24B provided in the YZ plane of the second manifold portion 20.

A hole 51 to which a cooling expansion valve 64 is attached, a hole 52 to which a battery expansion valve 66 is attached, and a hole 53 to which a second opening and closing valve 72 is attached are provided in a surface parallel to the YZ plane on one side in the first direction X in the first manifold portion 10. A hole 54 to which a heating expansion valve 68 is attached and a hole 55 to which a first opening and closing valve 71 is attached are provided in a surface parallel to an XY plane on one side in the second direction Y in the first manifold portion 10.

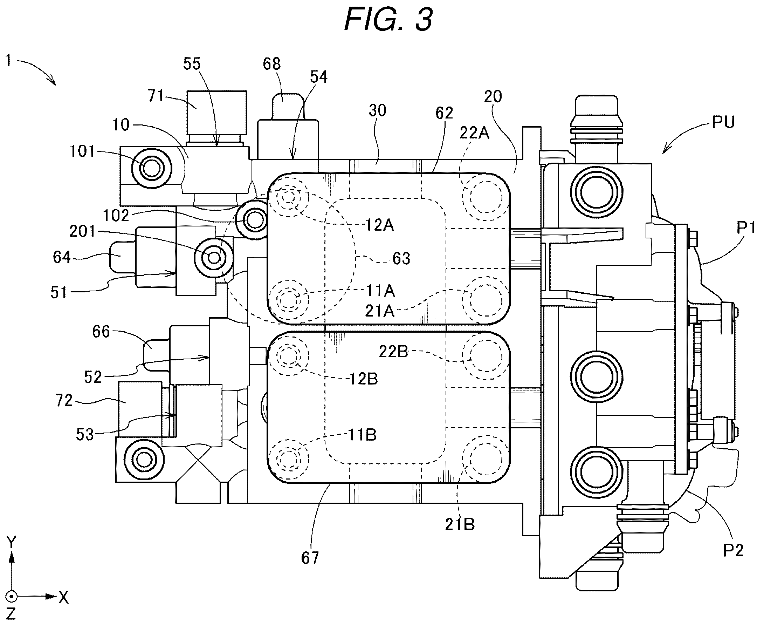

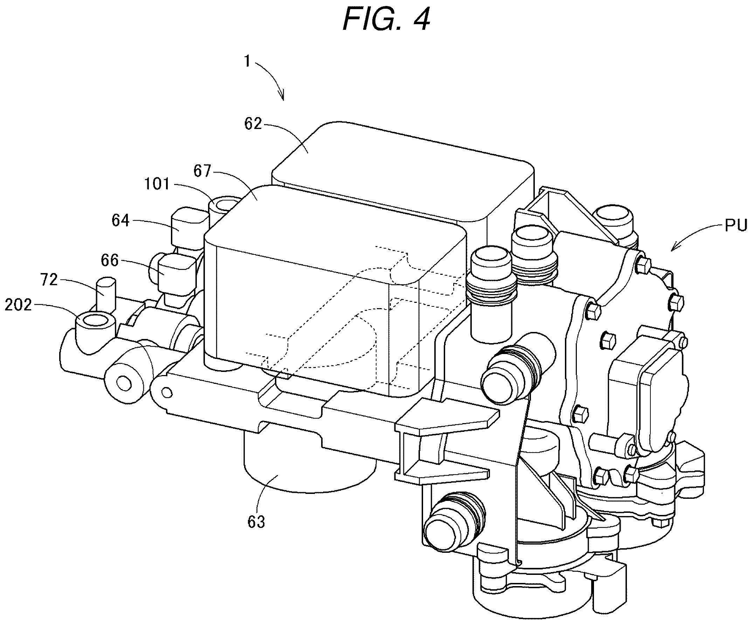

FIG. 3 illustrates a plan view of the manifold 1 with the above-described devices (water-cooled condenser 62, receiver 63, cooling expansion valve 64, battery expansion valve 66, chiller 67, heating expansion valve 68, first opening and closing valve 71, second opening and closing valve 72) attached, and FIG. 4 illustrates a perspective view of the manifold 1 with the devices attached.

As illustrated in FIGS. 3 and 4, the cooling expansion valve 64 is attached to the hole 51. The battery expansion valve 66 is attached to the hole 52. The second opening and closing valve 72 is attached to the hole 53. The heating expansion valve 68 is attached to the hole 54. The first opening and closing valve 71 is attached to the hole 55.

The water-cooled condenser 62 is attached to the outflow port 12A, the inflow port 11A, the outflow port 22A, and the inflow port 21A. The chiller 67 is attached to the outflow port 12B, the inflow port 11B, the outflow port 22B, and the inflow port 21B.

Further, a pump unit PU that allows the cooling liquid to flow through the cooling liquid flow path 20A is attached to the cooling liquid supply port 23A, the cooling liquid exhaust port 24A, the cooling liquid supply port 23B, and the cooling liquid exhaust port 24B. The pump unit PU includes a pump P1 that allows the cooling liquid introduced into the water-cooled condenser 62 to flow and a pump P2 that allows the cooling liquid introduced into the chiller 67 to flow.

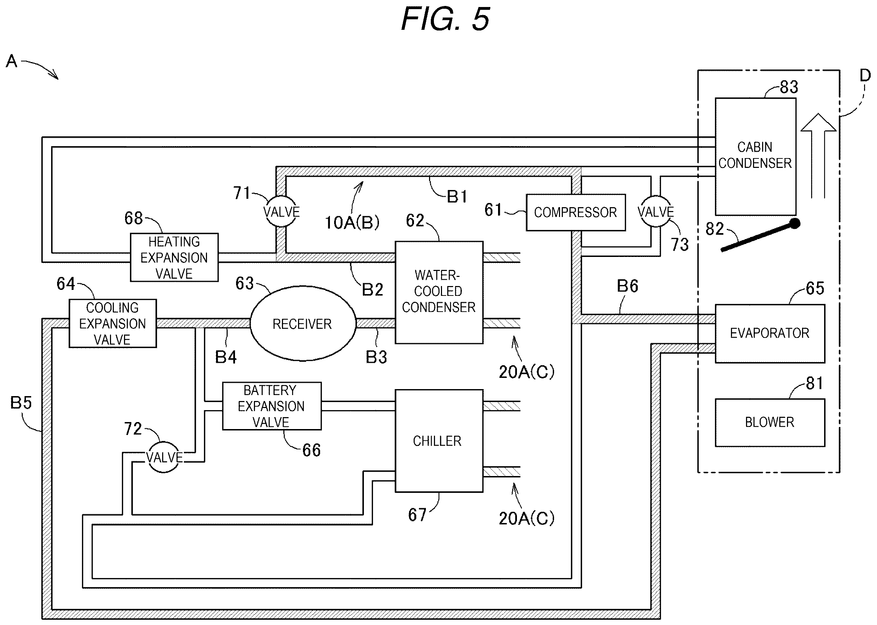

FIG. 5 illustrates a circuit diagram of the vehicle air conditioning system A to which the manifold 1 is applied. The vehicle air conditioning system A is mounted on a vehicle, and includes the refrigerant module B, the cooling liquid module C, and the heating, ventilation, and air conditioning unit (HVAC unit) D in FIG. 5.

The refrigerant module B includes a compressor 61, the water-cooled condenser 62, the receiver 63, the cooling expansion valve 64, an evaporator 65, the battery expansion valve 66, the chiller 67, and the heating expansion valve 68, and the refrigerant flow path 10A allows the refrigerant to flow through each functional unit. Further, the first opening and closing valve 71, the second opening and closing valve 72, and a third opening and closing valve 73 are provided in the refrigerant flow path 10A. Details will be described later, and the vehicle air conditioning system A is capable of conditioning air in a vehicle interior by the refrigerant module B.

First, a case where the HVAC unit D cools the vehicle interior will be described. The compressor 61 compresses the refrigerant. Accordingly, the refrigerant becomes a high-temperature compressed gas. The compressor 61 sends the high-temperature compressed gaseous refrigerant to a first refrigerant path B1. At this time, the first opening and closing valve 71 is opened, and the heating expansion valve 68 is closed. Therefore, the refrigerant sent from the compressor 61 to the first refrigerant path B1 is sent to the water-cooled condenser 62 via a second refrigerant path B2.

The water-cooled condenser 62 condenses the refrigerant compressed by the compressor 61. The water-cooled condenser 62 is configured such that the cooling liquid that exchanges heat with the refrigerant flows therethrough. In the water-cooled condenser 62, the flow path through which the refrigerant flows and the flow path through which the cooling liquid flows are formed separately from each other. The refrigerant is condensed and liquefied as heat is absorbed by the cooling liquid. The liquefied refrigerant is sent to a third refrigerant path B3. The water-cooled condenser 62 may be an air-cooled condenser provided near the radiator.

The refrigerant sent from the water-cooled condenser 62 to the third refrigerant path B3 is introduced into the receiver 63. The receiver 63 is provided on a surface of the manifold 1 opposite to a surface on which the water-cooled condenser 62 is provided. Since the receiver 63 is provided on an outlet side of the water-cooled condenser 62, the receiver 63 corresponds to a so-called highpressure receiver. The receiver 63 absorbs a fluctuation in amount of the refrigerant in the evaporator 65 caused by a load fluctuation. The receiver 63 may be integrated with the water-cooled condenser 62.

When cooling the vehicle interior, the cooling expansion valve 64 is opened at a predetermined opening degree, and the battery expansion valve 66 and the second opening and closing valve 72 are closed. Therefore, the refrigerant from the receiver 63 is sent to the cooling expansion valve 64 via a fourth refrigerant path B4. In the cooling expansion valve 64, the refrigerant (liquefied refrigerant) is expanded and turned into a low-temperature and low-pressure atomized state. The atomized refrigerant is sent to the evaporator 65 via a fifth refrigerant path B5.

The evaporator 65 evaporates the refrigerant expanded in the cooling expansion valve 64 and sends the refrigerant to a sixth refrigerant path B6. As described above, the refrigerant that is expanded in the cooling expansion valve 64 and turned into a low-temperature and low-pressure atomized state flows through the evaporator 65, and such a refrigerant is sent to the evaporator 65. In the evaporator 65, the atomized refrigerant evaporates by absorbing heat from, for example, outside air. At this time, the third opening and closing valve 73 is closed, and the refrigerant evaporated and vaporized in the evaporator 65 flows to the compressor 61 through the sixth refrigerant path B6. The refrigerant sent from the evaporator 65 to the sixth refrigerant path B6 may undergo gas-liquid separation in an accumulator before being introduced into the compressor 61.

The HVAC unit D includes the evaporator 65, a blower 81, a switcher 82, and a cabin condenser 83. The blower 81 aspirates outside air, and sends the aspirated outside air to the evaporator 65.

In the evaporator 65, heat is exchanged between the outside air sent from the blower 81 and the refrigerant supplied via the fifth refrigerant path B5, and the air after the heat exchange is introduced into the vehicle interior. Specifically, the outside air is cooled in the evaporator 65, and cold air is introduced into the vehicle interior. Accordingly, the cooling can be performed in the vehicle interior.

As illustrated in FIGS. 3 and 4, the first refrigerant path B1 is provided to communicate with a first inlet port 101 in the manifold 1. The second refrigerant path B2, the third refrigerant path B3, and the fourth refrigerant path B4 are provided inside the manifold 1. The fifth refrigerant path B5 is provided to communicate with a first exhaust port 201 in the manifold 1. The sixth refrigerant path B6 is provided to communicate with a second exhaust port 202 in the manifold 1.

In this case, the switcher 82 controls the air from the evaporator 65 not to be introduced into the cabin condenser 83.

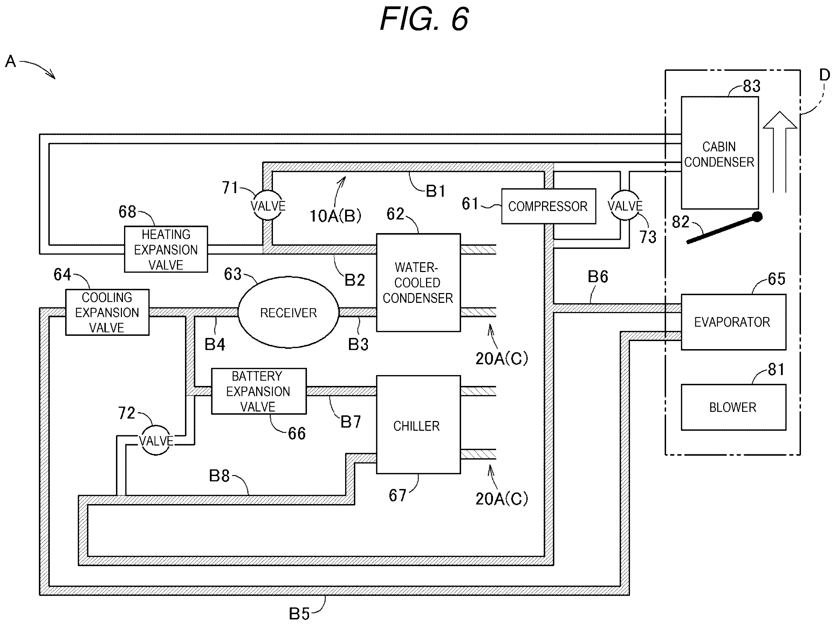

When cooling a battery mounted on the vehicle during vehicle interior cooling, the battery expansion valve 66 is opened from a cooling operation state illustrated in FIG. 5. Accordingly, as illustrated in FIG. 6, the refrigerant from the receiver 63 is sent not only to the cooling expansion valve 64 but also to the battery expansion valve 66. At this time, the opening degree of the battery expansion valve 66 is set according to strength for cooling the battery.

In the battery expansion valve 66, the refrigerant (liquefied refrigerant) is expanded and turned into a low-temperature and low-pressure atomized state. The atomized refrigerant is sent to the chiller 67 via a seventh refrigerant path B7.

The chiller 67 evaporates the refrigerant expanded in the battery expansion valve 66, and sends the refrigerant to an eighth refrigerant path B8. As described above, the refrigerant that is expanded in the battery expansion valve 66 and turned into a low-temperature and low-pressure atomized state flows through the chiller 67.

The chiller 67 is configured such that a cooling liquid that exchanges heat with the refrigerant flows therethrough. In the chiller 67, a flow path through which the refrigerant flows and a flow path through which the cooling liquid flows are formed separately from each other. The refrigerant evaporates (vaporizes) by exchanging heat with the cooling liquid. The vaporized refrigerant is sent to the eighth refrigerant path B8, merges with the refrigerant in the sixth refrigerant path B6, and is sent to the compressor 61.

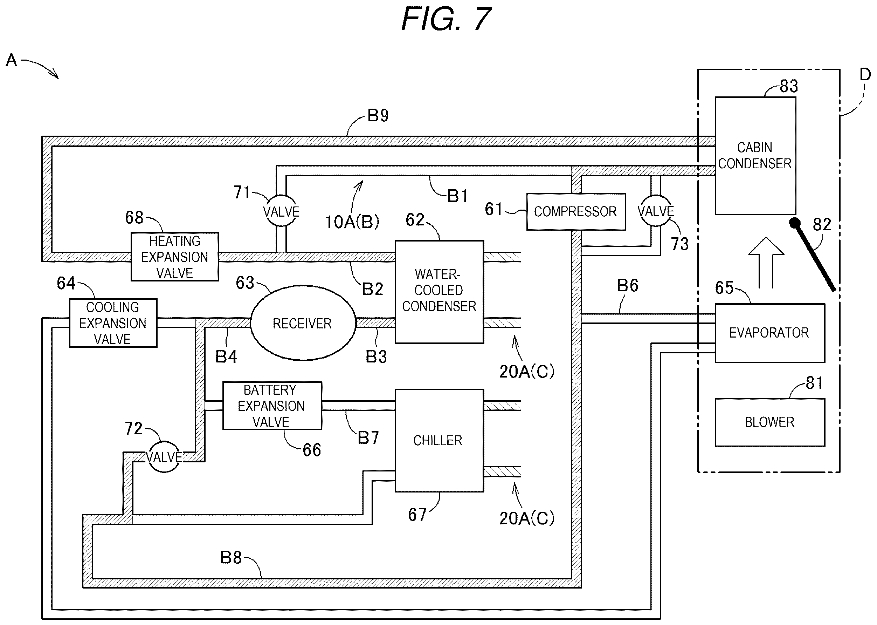

The HVAC unit D can also heat the vehicle interior. In this case, the first opening and closing valve 71 is closed. Therefore, as illustrated in FIG. 7, the refrigerant compressed in the compressor 61 is introduced into the cabin condenser 83. At this time, the switcher 82 of the HVAC unit D is controlled such that air from the blower 81 is introduced into the cabin condenser 83.

In the cabin condenser 83, heat is exchanged with the air from the blower 81, and the refrigerant compressed by the compressor 61 is condensed. Accordingly, the air from the blower 81 is heated, and the heated air can be sent to the vehicle interior. The cabin condenser 83 sends the refrigerant condensed by heat exchange with the air to a ninth refrigerant path B9.

The refrigerant sent from the cabin condenser 83 to the ninth refrigerant path B9 is introduced into the heating expansion valve 68. The heating expansion valve 68 is opened at a predetermined degree. In the heating expansion valve 68, the refrigerant (liquefied refrigerant) is expanded and turned into a low-temperature and low-pressure atomized state. The atomized refrigerant is sent to the water-cooled condenser 62 via the second refrigerant path B2.

The water-cooled condenser 62 evaporates the refrigerant atomized by the heating expansion valve 68. As described above, the water-cooled condenser 62 is configured such that the cooling liquid that exchanges heat with the refrigerant flows therethrough. In the water-cooled condenser 62, the refrigerant evaporates by absorbing heat from the cooling liquid. The evaporated refrigerant is sent to the third refrigerant path B3.

The refrigerant sent from the water-cooled condenser 62 to the third refrigerant path B3 is introduced into the receiver 63. When heating the vehicle interior, the second opening and closing valve 72 is opened, and the cooling expansion valve 64 and the battery expansion valve 66 are closed. Therefore, the refrigerant from the receiver 63 is sent to the eighth refrigerant path B8 via the fourth refrigerant path B4. The refrigerant sent to the eighth refrigerant path B8 is returned to the compressor 61.

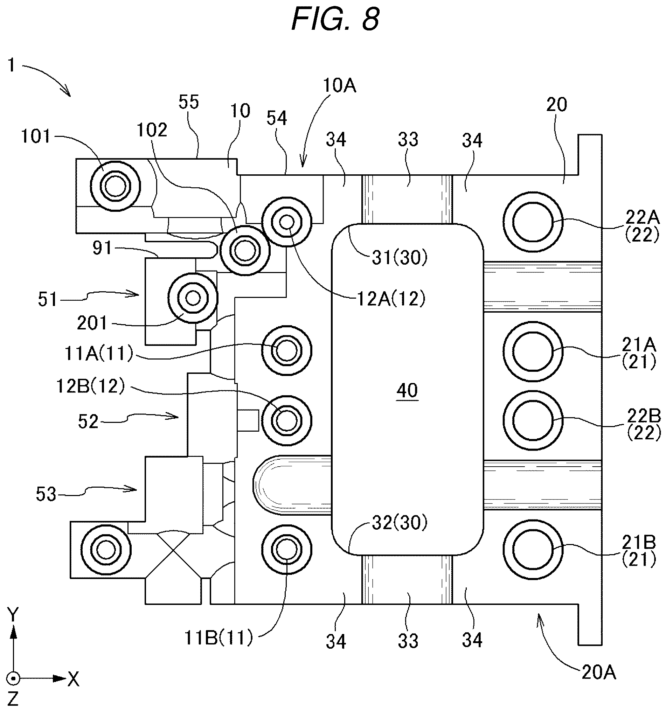

The ninth refrigerant path B9 is provided to communicate with a second inlet port 102 (see FIGS. 3 and 8) in the manifold 1.

When heating the vehicle interior, the third opening and closing valve 73 can be opened to return the refrigerant flowing through the first refrigerant path B1 to the eighth refrigerant path B8, thereby circulating the refrigerant.

Such a manifold 1 can be provided with a support portion and fixed integrally to the vehicle. Accordingly, compared to a case where the first manifold portion 10 including the refrigerant flow path 10A and the second manifold portion 20 including the cooling liquid flow path 20A are separately provided, the size can be reduced, and the attachment to the vehicle can be easily performed.

### Other Embodiments

Next, other embodiments of the manifold 1 will be described.

In the manifold 1, a slit 91 may be provided at least one of between an inflow port through which a refrigerant flows in and an outflow port through which the refrigerant flows out in the first manifold portion 10 and between an inflow port through which a cooling liquid flows in and an outflow port through which the cooling liquid flows out in the second manifold portion 20. FIG. 8 illustrates an example in which the slit 91 is provided between the inflow port through which the refrigerant flows in and the outflow port through which the refrigerant flows out in the first manifold portion 10. In the first manifold portion 10, the inflow port through which the refrigerant flows in corresponds to the first inlet port 101 communicating with the first refrigerant path B1. The outflow port through which the refrigerant flows out in the first manifold portion 10 corresponds to the first exhaust port 201 communicating with the fifth refrigerant path B5. Therefore, the manifold 1 is provided with the slit 91 between the first inlet port 101 and the first exhaust port 201. Accordingly, heat exchange between the refrigerant introduced into the manifold 1 from the first inlet port 101 and the refrigerant exhausted from the first exhaust port 201 can be prevented. Of course, the slit 91 may be enlarged so as to be positioned between the second inlet port 102 and the first exhaust port 201.

Although not illustrated, the slit 91 may be provided between the inflow port 11A and the outflow port 12A, or between the inflow port 11B and the outflow port 12B. The slit 91 may be provided between the inflow port 21A and the outflow port 22A, between the inflow port 21B and the outflow port 22B, or between the inflow port 21A and the outflow port 22B. The slit 91 may be provided between the inflow port 11A and the outflow port 12B.

In the above embodiment, the first manifold portion 10 and the second manifold portion 20 are coupled to each other by the first coupling portion 31 and the second coupling portion 32 included in the coupling portion 30. However, the first manifold portion 10 and the second manifold portion 20 may be coupled to each other by a single coupling portion of the coupling portion 30, or may be coupled to each other by three or more coupling portions of the coupling portion 30.

In the above embodiment, the first coupling portion 31 and the second coupling portion 32 are provided with a gap therebetween. However, the first coupling portion 31 and the second coupling portion 32 may be coupled to each other without a gap therebetween. In this case, a wall thickness of the coupling portion 30 between the first coupling portion 31 and the second coupling portion 32 may be smaller than a wall thickness of other portions. The first coupling portion 31 and the second coupling portion 32 are shown to be provided at both ends in the second direction Y. However, the first coupling portion 31 and the second coupling portion 32 may not be provided at both ends in the second direction Y, and the first coupling portion 31 may be provided at one end in the second direction Y and the second coupling portion 32 may be provided at the other end in the second direction Y.

In the above embodiment, the gap is provided between the inflow port 11 through which the refrigerant flows in and the outflow port 12 through which the refrigerant flows out in the first manifold portion 10 and the inflow port 21 through which the cooling liquid flows in and the outflow port 22 through which the cooling liquid flows out in the second manifold portion 20. However, the gap may not be provided between the inflow port 11 through which the refrigerant flows in and the outflow port 12 through which the refrigerant flows out in the first manifold portion 10 and the inflow port 21 through which the cooling liquid flows in and the outflow port 22 through which the cooling liquid flows out in the second manifold portion 20.

In the above embodiment, the first manifold portion 10 and the second manifold portion 20 are coupled by the coupling portion 30 and are formed as an integrally molded product. However, the first manifold portion 10 and the second manifold portion 20 may be separated from each other and may be configured as separate bodies.

### Overview of Above Embodiment

Hereinafter, an overview of the manifold 1 described above will be described.
(1) A manifold 1 includes: a first manifold portion 10 including a refrigerant flow path 10A through which a refrigerant flows; a second manifold portion 20 including a cooling liquid flow path 20A through which a cooling liquid flows; and a coupling portion 30 configured to couple the first manifold portion 10 and the second manifold portion 20 to each other, in which the first manifold portion 10, the second manifold portion 20, and the coupling portion 30 are integrally molded into an integrally molded product, and a cross-sectional area of a surface orthogonal to a first direction X in which the first manifold portion 10 and the second manifold portion 20 face each other in the coupling portion 30 is smaller than a cross-sectional area of a surface orthogonal to the first direction in each of the first manifold portion 10 and the second manifold portion 20.

According to the present configuration, heat transfer from one of the first manifold portion 10 and the second manifold portion 20 to the other one can be prevented. Therefore, heat exchange between the refrigerant flowing through the refrigerant flow path 10A of the first manifold portion 10 and the cooling liquid flowing through the cooling liquid flow path 20A of the second manifold portion 20 can be prevented.

(2) In the manifold 1 described in (1), it is preferable that the first manifold portion 10 and the second manifold portion 20 are coupled to each other by a first coupling portion 31 and a second coupling portion 32 included in the coupling portion 30, and the first coupling portion 31 and the second coupling portion 32 are provided with a gap therebetween.

According to the present configuration, the heat transfer from one of the first manifold portion 10 and the second manifold portion 20 to the other one can be further prevented by the gap provided between the first coupling portion 31 and the second coupling portion 32. Therefore, a heat insulating performance between the first manifold portion 10 and the second manifold portion 20 can be further improved.

(3) In the manifold 1 described in (1) or (2), it is preferable that when viewed along a third direction Z orthogonal to both the first direction X and a second direction Y in which the first coupling portion 31 and the second coupling portion 32 face each other, the gap is provided between an inflow port 11 through which the refrigerant flows in and an outflow port 12 through which the refrigerant flows out in the first manifold portion 10 and an inflow port 21 through which the cooling liquid flows in and an outflow port 22 through which the cooling liquid flows out in the second manifold portion 20.

According to the present configuration, the heat transfer between the inflow port 11 and the outflow port 12 provided in the first manifold portion 10 and the inflow port 21 and the outflow port 22 provided in the second manifold portion 20 can be prevented.

(4) In the manifold 1 described in (3), it is preferable that a slit 91 is provided at least one of: between an inflow port through which a refrigerant flows in and an outflow port through which the refrigerant flows out in the first manifold portion 10 and between an inflow port through which a cooling liquid flows in and an outflow port through which the cooling liquid flows out in the second manifold portion 20.

According to the present configuration, when the slit 91 is provided in the first manifold portion 10, the heat transfer between the refrigerant introduced from the inflow port 11 and the refrigerant exhausted from the outflow port 12 in the first manifold portion 10 can be prevented. When the slit 91 is provided in the second manifold portion 20, the heat transfer between the cooling liquid introduced from the inflow port 21 and the cooling liquid exhausted from the outflow port 22 in the second manifold portion 20 can be prevented.

### Industrial Applicability

The technique according to the present disclosure can be used for a manifold including a refrigerant flow path through which a refrigerant flows and a cooling liquid flow path through which a cooling liquid flows.

## Claims

1. A manifold (1) comprising:
a first manifold portion (10) including a refrigerant flow path (10A) through which a refrigerant flows;
a second manifold portion (20) including a cooling liquid flow path (20A) through which a cooling liquid flows; and
a coupling portion (30) configured to couple the first manifold portion and the second manifold portion to each other, wherein
the first manifold portion, the second manifold portion, and the coupling portion are integrally molded into an integrally molded product, and
a cross-sectional area of a surface orthogonal to a first direction (X) in which the first manifold portion and the second manifold portion face each other in the coupling portion is smaller than a cross-sectional area of a surface orthogonal to the first direction in each of the first manifold portion and the second manifold portion.

2. The manifold according to claim 1, wherein
the first manifold portion and the second manifold portion are coupled to each other by a first coupling portion (31) and a second coupling portion (32) included in the coupling portion, and
the first coupling portion and the second coupling portion are provided with a gap therebetween.

3. The manifold according to claim 2, wherein
when viewed along a third direction (Z) orthogonal to both the first direction and a second direction (Y) in which the first coupling portion and the second coupling portion face each other, the gap is provided between an inflow port (11) through which the refrigerant flows in and an outflow port (12) through which the refrigerant flows out in the first manifold portion and an inflow port (21) through which the cooling liquid flows in and an outflow port (22) through which the cooling liquid flows out in the second manifold portion.

4. The manifold according to claim 1 or 2, wherein a slit (91) is provided at least one of: between an inflow port through which the refrigerant flows in and an outflow port through which the refrigerant flows out in the first manifold portion and between an inflow port through which the cooling liquid flows in and an outflow port through which the cooling liquid flows out in the second manifold portion.

5. The manifold according to claim 1 or 2, wherein a heat exchanger is provided, the heat exchanger being configured to exchange heat between the refrigerant and the cooling liquid in the first manifold portion and the second manifold portion.

6. The manifold according to claim 1 or 2, wherein the refrigerant flow path and the cooling liquid flow path are not provided in the coupling portion.
